# DEMANDE DE BREVET EUROPEEN

(11) **EP 0 644 673 A1**
(43) Date de publication de la demande: **22.03.1995**
(21) Numéro de dépôt: 94401836.5
(22) Date de dépôt: 10.08.1994
(51) Int. Cl.: H04J 13/00, F42C 15/42

(54) **Transmission de données par étalement de spectre à séquence directe**

(30) Priorité: 22.09.1993 FR 9311261
(71) Demandeur: SOCIETE NATIONALE D'ETUDE ET DE CONSTRUCTION DE MOTEURS D'AVIATION, "S.N.E.C.M.A.", F-75015 Paris (FR)
(72) Inventeur: Lucidarme, Thierry Jean, F-92310 Sèvres (FR); Le Garrec, Guy, F-95110 Sannois (FR); Cousty, Jean-Pierre Patrick, F-87350 Panazol (FR)

(57) **Abrégé**

Conformément à l'invention, à l'émission, les données sont codées par un codage "à transition" de type différentiel et viennent commander un multiplexeur qui pour chaque bit de données, sélectionne une séquence pseudo-aléatoire à haut débit ou la même séquence décalée d'une période d'horloge de code suivant la valeur du bit de données ; à la réception, le signal reçu est corrélé avec un code pseudo-aléatoire identique à celui produit à l'émission et synchronisé sur le signal reçu. Le signal d'erreur de synchronisation est mesuré et des impulsions d'erreur sont détectées à chaque fois que la séquence pseudo-aléatoire sélectionnée à l'émission change. Les changements de séquence pseudo-aléatoire correspondant à des changements d'état de l'information émise, cette information émise est reconstituée par comparaison des impulsions d'erreur à deux niveaux de seuil respectivement positif et négatif suivie d'une démodulation différentielle.

## Description

Procédé et dispositif de transmission de données par étalement de spectre à séquence directe et application à un système de télécommande d'un changement d'état.

L'invention concerne un système de transmission de données par étalement de spectre à séquence directe par déplacement de séquences, permettant une transmission confidentielle et résistante aux brouillages et assurant une élimination des trajets multiples non désirés.

Elle peut être appliquée notamment pour une liaison à moyen débit ou pour une liaison à bas débit telle que, par exemple, une télécommande dans le cadre d'une application domotique, ou une télécommande d'activation ou de désactivation d'objets, tels que des mines, ou tout autre type de télécommande.

Lorsqu'il est recherché une transmission d'information discrète, confidentielle et résistante aux brouillages, il est connu de recourir aux techniques dites d'étalement du spectre à large bande. Dans la technique d'étalement à séquence directe, à l'émission, le signal utile module une séquence pseudo-aléatoire de valeurs binaires, appelée code d'étalement, dont le débit est beaucoup plus élevé que la largeur de bande du signal utile. La modulation est souvent effectuée au moyen d'un opérateur consistant en une simple inversion de phase au rythme des bits de code et équivalente à une modulation de phase du type PSK (PSK signifie en anglais "phase shift keying").
A la réception, le signal codé reçu est corrélé avec un code pseudo-aléatoire identique à celui produit à l'émission, dont le calage, par un dispositif de synchronisation, permet de restituer le signal utile initial. Toutefois dans les systèmes par étalement de spectre à séquence directe existants, la démodulation du signal reçu est généralement complexe et coûteuse car elle nécessite l'utilisation de plusieurs voies de corrélation pour effectuer la synchronisation du code produit dans le récepteur avec le signal reçu et pour effectuer la démodulation de phase des données.

Dans de nombreuses applications, des contraintes de volume et de coût du matériel font rechercher sa simplicité. Il est alors souhaitable de réduire le nombre de voies de corrélation au niveau du récepteur. L'invention a pour but de pallier les inconvénients précédents et de réaliser un système de transmission d'information discrète simple donc de faible coût, ne présentant pas de démodulation complexe et dans lequel les données sont codées par modulation de phase de façon à être difficilement détectables.

Pour cela, conformément à l'invention, à l'émission, les données sont codées par un codage "à transition" de type différentiel et viennent commander un multiplexeur qui pour chaque bit de données, sélectionne une séquence pseudo-aléatoire à haut débit ou la même séquence décalée d'une période d'horloge de code suivant la valeur du bit de données; à la réception, le signal reçu est corrélé avec un code pseudo-aléatoire identique à celui produit à l'émission et synchronisé sur le signal reçu. Le signal d'erreur de synchronisation est mesuré et des impulsions d'erreur sont détectées à chaque fois que la séquence pseudo-aléatoire sélectionnée à l'émission change. Les changements de séquence pseudo-aléatoire correspondant à des changements d'état de l'information émise, cette information émise est reconstituée par comparaison des impulsions d'erreur à deux niveaux de seuil respectivement positif et négatif suivie d'une démodulation différentielle.

Selon l'invention, le procédé de transmission de données par étalement de spectre à séquence directe consiste :
- à l'émission, à produire, au rythme d'un signal d'horloge, un code d'étalement constitué d'une séquence pseudo-aléatoire de valeurs binaires, à sélectionner et à émettre suivant la valeur binaire des données, une première séquence pseudo-aléatoire S1, respectivement une deuxième séquence pseudo-aléatoire S2, la deuxième séquence S2 étant identique à la première séquence S1 décalée d'une période d'horloge du code,
- à la réception à produire un code pseudo-aléatoire identique à celui produit à l'émission et synchronisé sur le signal reçu, à détecter des impulsions d'erreur correspondant à des changements d'état des données transmises et à comparer ces impulsions d'erreur à deux niveaux de seuil respectivement positif et négatif.

L'invention concerne également un dispositif de transmission de données par étalement de spectre à séquence directe comportant un dispositif d'émission et un dispositif de réception caractérisé en ce que :
- le dispositif d'émission comporte un générateur de code pseudo-aléatoire produisant une séquence pseudo-aléatoire de valeurs binaires au rythme d'un signal d'horloge, et un multiplexeur qui, suivant la valeur binaire des données, sélectionne une séquence pseudo-aléatoire S1, respectivement S2, la séquence S2 étant la même séquence que S1 décalée d'une période d'horloge de code,
- le dispositif de réception comporte un discriminateur de phase comportant une boucle à verrouillage de retard dans laquelle un générateur de code produit un code pseudo-aléatoire identique à celui produit à l'émission et synchronisé sur celui-ci, un dispositif de détection d'un signal d'erreur de synchronisation comportant un dispositif de comparaison à deux niveaux de seuil.

L'invention concerne aussi une application du dispositif de transmission de données à un système de télécommande d'un changement d'état de mines à partir d'une station embarquée à bord d'un véhicule, caractérisé en ce que le véhicule (50) est équipé de deux dispositifs d'émission (51, 52) pour émettre vers l'avant, respectivement vers l'arrière, du véhicule (50) des ordres de télécommande du changement de l'état des mines et d'un dispositif de réception (53) pour recevoir de chaque mine (54,55) un signal significatif de son état, et en ce que chaque mine est équipée d'un dispositif de réception (56) pour recevoir l'ordre de changement d'état provenant du véhicule (50) et un dispositif d'émission (57) pour émettre en direction du véhicule (50) un signal significatif de son état.

D'autres particularités et avantages de l'invention apparaitront clairement dans la suite de la description donnée à titre d'exemple non limitatif et faite en regard des figures annexées qui représentent :
- la figure 1, un schéma de principe d'un dispositif d'émission, selon l'invention,
- la figure 2, un schéma de principe d'un dispositif de réception, selon l'invention,
- la figure 3, un exemple de fonction de transfert d'un discriminateur de phase, selon l'invention,
- la figure 4a, un exemple d'évolution des fonctions d'autocorrélation du code pour chacune des voies de corrélation, selon l'invention,
- la figure 4b, l'évolution de la fonction, différence issue de la comparaison des fonctions d'autocorrélation représentées sur la figure 4a,
- a figure 4c, un exemple de variation du signal d'erreur de synchronisation en fonction du temps, selon l'invention.

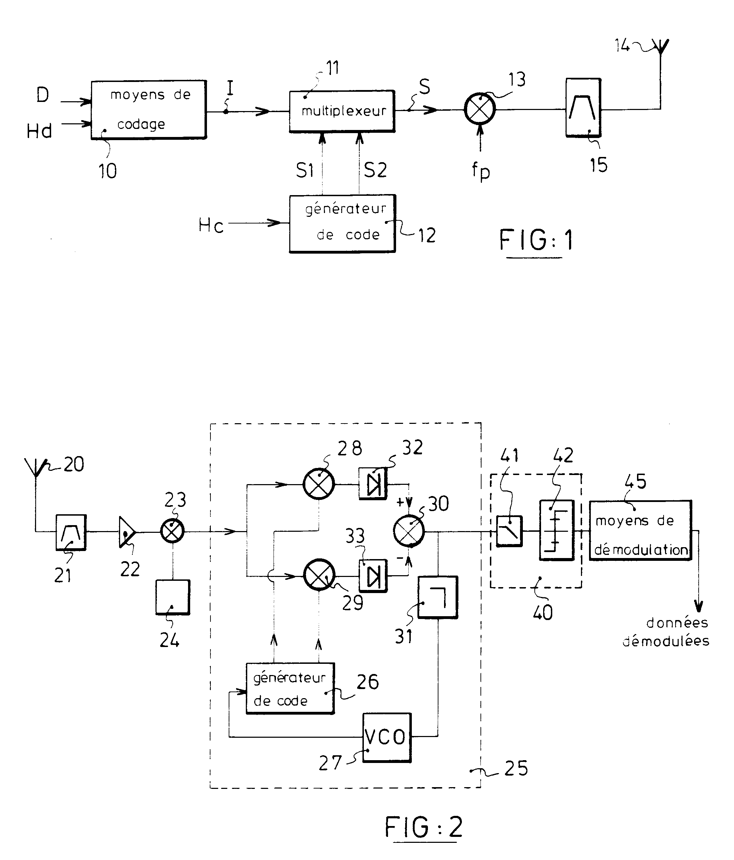

La figure 1 repésente un schéma de principe d'un dispositif d'émission, selon l'invention.

A l'émission, l'information D à transmettre et constituée par des états de valeurs binaires rythmés par une horloge Hd est codée de façon différentielle par des moyens de codage 10. L'information résultante I à bas débit vient commander un multiplexeur 11 qui pour chaque bit de données sélectionne une séquence pseudo-aléatoire à haut débit S1 ou la même séquence décalée d'une période d'horloge de code S2, suivant la valeur O ou 1 de l'information I. Les séquences S1 et S2 sont produites par un générateur de code 12 commandé par une horloge de code Hc. La sélection de séquence est asynchrone par rapport à l'horloge du code. Le générateur de code peut être par exemple un registre à décalage en réaction linéaire comportant n étages et produisant une séquence de longueur (2ⁿ - 1) bits.

Le signal de sortie S du multiplexeur 11 est appliqué à un modulateur 13 biphase 0- π qui réalise une transposition du signal S dans la bande des hyperfréquences au moyen d'une modulation avec une fréquence porteuse fp. L'information codée est alors transmise par une antenne d'émission 14 après filtrage dans un filtre passe-bande 15.

La modulation du signal S avec la fréquence porteuse peut être considérée comme une modulation de position de la séquence pseudo-aléatoire. La modulation de position est équivalente à une modulation de phase et ne présente donc pas l'inconvénient d'être trop facilement détectable.

La figure 2 représente un schéma de principe d'un dispositif de réception, selon l'invention.

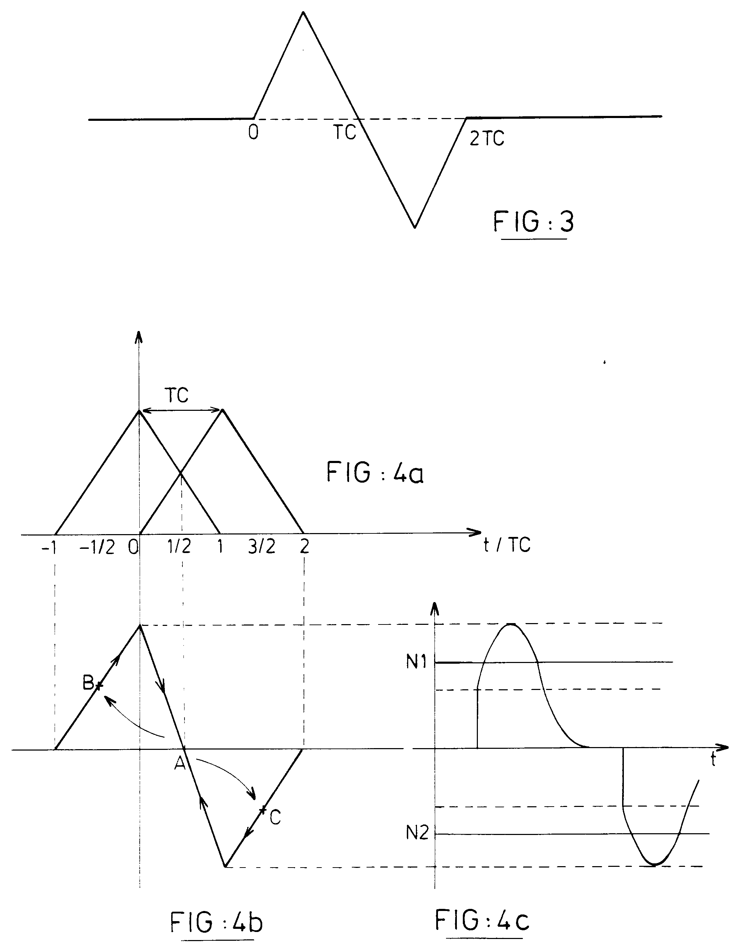

A la réception, l'information est reçue par une antenne de réception 20 et transposée à une fréquence intermédiaire FI, après filtrage dans un filtre passe-bande 21 et après amplification dans un amplificateur à faible bruit 22, au moyen d'une modulation dans un modulateur 23 avec une fréquence porteuse issue d'un oscillateur local 24. Le signal reçu est ensuite appliqué à un discriminateur de phase 25 ayant une fonction de transfert dont l'allure est représentée sur la figure 3. TC représente une période d'horloge de code. Le signal de sortie du discriminateur de phase 25 est traité par un dispositif de détection 40 qui démodule le signal sans risque d'ambiguïté de π, puis par des moyens de démodulation différentielle 45 qui restituent l'information d'origine.

Le discriminateur de phase 25 comporte une boucle à verrouillage de retard dans laquelle un générateur de code 26 commandé par une fréquence d'horloge issue d'un oscillateur 27 contrôlé en tension VCO produit un code formé d'une séquence pseudo-aléatoire de valeurs binaires identique à celle produite à l'émission, le code étant recalé par corrélation avec le signal reçu. A cet effet, le discriminateur de phase 25 comporte deux voies de corrélation comportant chacune un corrélateur 28, 29, associé à un détecteur d'amplitude 32, 33, recevant deux versions décalées du code produit par le générateur de code 26 et effectuant des mesures de corrélation avance et retard. Les deux mesures de corrélation sont ensuite comparées dans un modulateur 30 qui effectue la différence des signaux obtenus et qui délivre en sortie un signal d'erreur de synchronisation.

A titre d'exemple, la figure 4a représente les fonctions d'autocorrélation du code pour chacune des voies de corrélation lorsque ces dernières sont décalées d'un bit de code. TC représente une période d'horloge de code. Les maxima de corrélation des deux voies sont décalées d'une période d'horloge de code.

Le signal d'erreur est utilisé d'une part dans la boucle à verrouillage de retard pour commander l'oscillateur 27 contrôlé en tension et d'autre part en sortie du discriminateur de phase 25 pour décoder l'information.

Dans la boucle à verrouillage de retard, le signal d'erreur est filtré dans un filtre de boucle 31 à bande étroite puis appliqué en entrée de l'oscillateur 27 contrôlé en tension qui modifie la fréquence d'horloge du code de façon à réduire l'erreur de synchronisation. L'oscillateur contrôlé en tension est choisi suffisamment stable de façon que l'écart maximum entre les fréquences d'horloge du code produit à l'émission et du code produit à la réception soit faible. Cette condition est nécessaire pour que l'asservissement du code produit à la réception sur le signal reçu soit possible. A titre d'exemple, pour un écart maximal de 200 Hz entre les deux fréquences, l'oscillateur doit être stable à 10⁻⁶près.

La figure 4b représente la fonction différence issue de la comparaison des fonctions d'autocorrélation représentées sur la figure 4a. La fonction différence s'annule au point A qui correspond à la synchronisation du code du récepteur sur le signal reçu. Le temps de synchronisation du système est inférieur au débit informatif. Lorsque la synchronisation est obtenue, tant que la valeur des bits informatifs ne change pas, par exemple une suite de "1" (respectivement une suite de "O") est émise, la boucle à verrouillage de retard est asservie au point A puisque c'est toujours la même séquence qui est émise. Dès que la valeur des bits informatifs change, la séquence émise est décalée d'une période d'horloge de code, la boucle est décorrélée et le point d'asservissement change.

Par exemple, si l'émission d'un "O" (respectivement d'un "1") succède à l'émission d'un "1" (respectivement d'un "O"), l'asservissement passe du point A au point C (respectivement au point B). Le code du récepteur n'est alors plus synchronisé sur le signal reçu ce qui provoque, en sortie du modulateur 30, une impulsion brève correspondant à une soudaine augmentation du signal d'erreur. Cette impulsion est utilisée pour commander l'oscillateur 27 contrôlé en tension et recaler le code produit par le générateur de code 26 sur le code émis. La durée de cette impulsion et la quantité d'énergie qu'elle possède sont fonction de la pente de l'oscillateur 27 et de la puissance du message reçu.

La figure 4c représente un exemple de variation du signal d'erreur en fonction du temps.

Lorsque la boucle à verrouillage de retard est asservie au point A, le signal d'erreur est nul. A chaque fois que l'information change d'état, le signal d'erreur présente une impulsion positive ou négative provoquant de la part de l'oscillateur contrôlé en tension un saut de recalage positif ou négatif. Chaque impulsion est donc associée à un changement d'état de l'information. L'impulsion est positive lorsque l'information passe de l'état 1 à l'état O, et négative lorsque l'information passe de l'état O à l'état 1.

Ainsi les impulsions sont caractéristiques de l'information émise et peuvent être exploitées pour reconstituer l'information émise sans ambiguïté de phase et sans utiliser une autre voie de corrélation.

Pour cela, en sortie du discriminateur de phase 25 le signal d'erreur est démodulé par un dispositif de détection 40 comportant un filtre passe-bas 41 et un dispositif de comparaison 42 à deux niveaux de seuil respectivement positif et négatif N1 et N2.

Le dispositif de comparaison à seuil bipolaire 42 restitue les données après comparaison avec le signal d'erreur.

La largeur de bande du filtre 41 est calculée en tenant compte du temps nécessaire pour la corrélation du code produit par le récepteur avec le signal reçu. Ce temps de corrélation est d'autant plus long que la longueur du code est importante. La largeur du filtre doit donc être adaptée à la longueur du code.

Les niveaux de seuil sont choisis arbitrairement en tenant compte du niveau de bruit reçu.

L'information émise est ensuite reconstituée par démodulation différentielle du signal effectuée par les moyens 45.

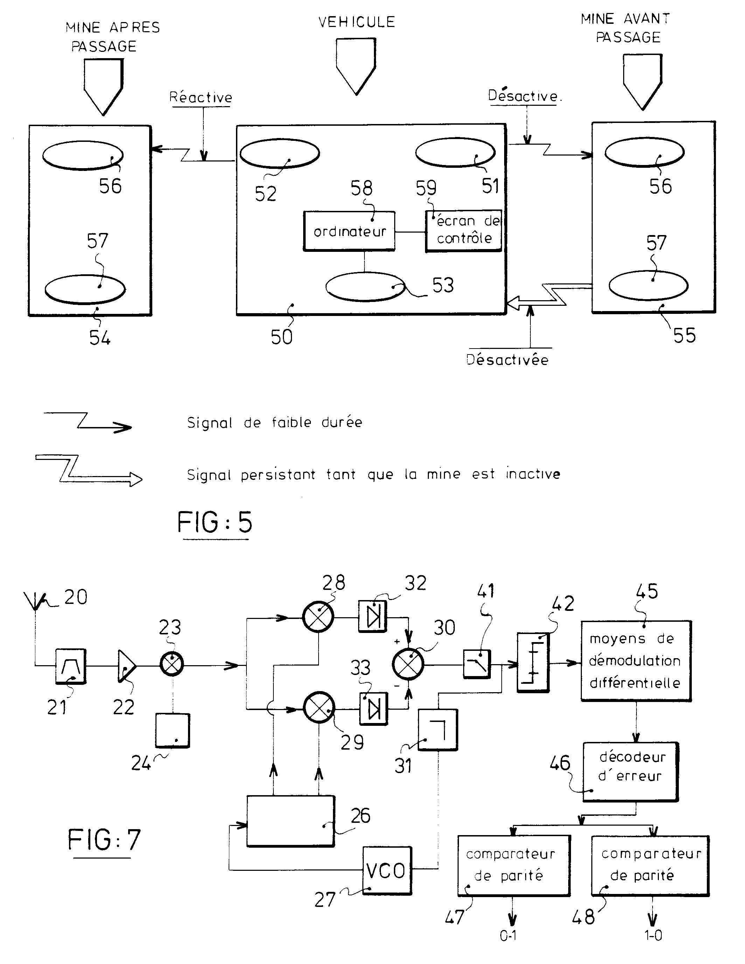

La figure 5 représente un exemple d'application du dispositif de transmission de données à un système de télécommande d'un changement d'état d'objets tels que la télécommande d'activation et de désactivation de mines dans un champ, selon l'invention.
Dans cet exemple, la télécommande d'activation et de désactivation des mines d'un champ de mines est effectuée à partir d'une station embarquée à bord d'un véhicule 50. Une cartographie rendant compte de la position et de l'état activé ou désactivé de chaque mine est à la disposition du pilote du véhicule 50. Pour permettre à ce véhicule de traverser le champ de mines, le véhicule 50 est équipé de premiers et de seconds moyens d'émission 51, 52 pour émettre vers l'avant, respectivement vers l'arrière du véhicule, des ordres d'activation ou de désactivation, et des moyens de réception 53 pour recevoir de chaque mine 54, 55 une confirmation de son état activé ou désactivé. Chaque mine est équipée de moyens de réception 56 pour recevoir l'ordre d'activation ou de désactivation provenant du véhicule 50 et des moyens d'émission 57 pour émettre en direction du véhicule un signal de confirmation de son état activé ou désactivé. Lorsque le véhicule 50 s'apprête à traverser le champ de mines, le pilote du véhicule transmet un ordre de désactivation des mines. Cet ordre est un signal de faible durée. Les mines recevant ce message se désactivent et émettent un message indiquant qu'elles sont dans cet état désactivé. le message est un signal persistant maintenu jusqu'à ce que les mines reçoivent l'ordre de se réactiver. Au fur et à mesure de la progression du véhicule, le pilote du véhicule transmet un ordre de réactivation des mines localisées derrière lui. Afin de pouvoir traverser le champ de mines avec un degré de sécurité élevé, le pilote du véhicule doit être renseigné à tout moment de l'état des mines qu'il va rencontrer sur son passage. Pour cela, à chaque mine a été attribuée une adresse qui lui est propre. L'adresse, la position et l'état de toutes les mines sont inscrits dans une liste, enregistrés dans une mémoire d'un ordinateur (58) et visualisés sur un écran de contrôle (59). L'ordinateur (58) et l'écran de contrôle (59) sont localisés à bord du véhicule. Chaque changement d'état d'une mine est aussitôt inscrit et visualisé sur l'écran de contrôle.

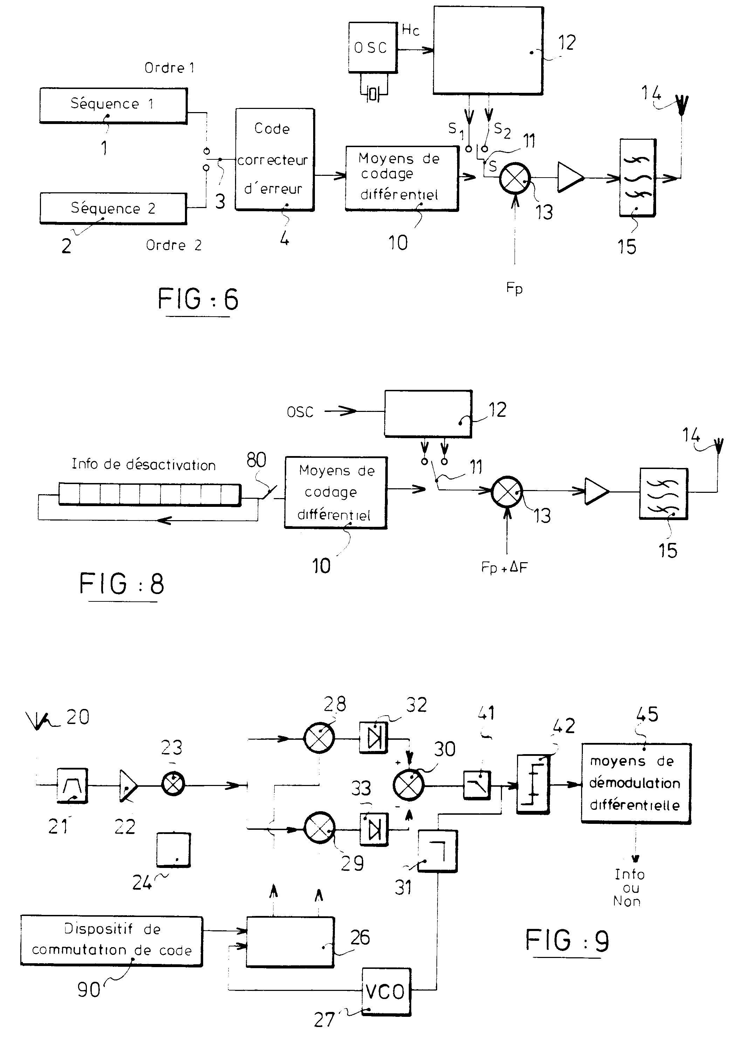

la figure 6 représente un exemple de réalisation des émetteurs embarqués à bord du véhicule, selon l'invention. Les émetteurs 51 et 52 étant identiques, un seul émetteur est représenté sur cette figure. Cet émetteur comporte toutes les fonctions de l'émetteur représenté sur la figure 1.
Afin de pouvoir activer ou désactiver les mines, l'émetteur à la possibilité de transmettre deux ordres différents 1, 2, constitués par des états de valeurs binaires, le choix de l'un de ces deux ordres étant effectué au moyen d'un commutateur 3. L'ordre choisi est ensuite codé par un code correcteur d'erreur 4, par exemple un code de Haming, de manière à améliorer le taux d'erreur par bit (un bit étant un état de valeur binaire), avant d'être codé de manière différentielle par les moyens de codage 10. Cette information résultante vient commander le multiplexeur 11 qui sélectionne la séquence pseudo-aléatoire à haut débit S1 ou la même séquence décalée d'une période d'horloge de code S2, suivant la valeur 0 ou 1 de l'information résultante. Le signal de sortie S du multiplexeur 11 est appliqué au modulateur 13 biphase O - π de manière à moduler une fréquence porteuse fp avant d'être rayonné.
L'ordre d'activation ou de désactivation est envoyé simultanément à toutes les mines situées vers l'avant ou vers l'arrière du véhicule.

la figure 7 représente un exemple de réalisation du récepteur intégré à chaque mine, selon l'invention. Le récepteur comporte toutes les fonctions du récepteur représenté sur la figure 2.
En outre, le signal obtenu en sortie des moyens de démodulation différentielle 45 est traité par un décodeur d'erreur 46 avant d'être traité parallèlement par deux comparateurs de parité 47, 48 pour déterminer si le message reçu correspond un ordre d'activation ou un ordre de désactivation. le premier, respectivement le deuxième, comparateur de parité connaît l'ordre d'activation, respectivement de désactivation, et effectue la comparaison entre le message reçu et l'ordre d'activation, respectivement de désactivation.

La figure 8 représente un exemple de réalisation de l'émetteur intégré à chaque mine, selon l'invention. L'émetteur comporte toutes les fonctions de l'émetteur représenté sur la figure 1.

Les données D à transmettre sont constituées par un message de désactivation. Ce message permet de renseigner le véhicule sur l'état activé ou désactivé de la mine. Un commutateur 80 permet de commander l'envoi du message de désactivation lorsque la mine est désactivée.
Chaque mine possède son propre code d'étalement auquel correspond bijectivement son adresse. L'information portée par ce code d'étalement est un mot binaire qui est émis quand la mise est désactivée. Ce signal est émis continûment tant que la mine est désactivée. Aucun signal n'est émis lorsque la mine est activée.

la figure 9 représente un exemple de réalisation du récepteur embarqué à bord du véhicule, selon l'invention. Le récepteur comporte toutes les fonctions du récepteur représenté sur la figure 2. En outre, il comporte un dispositif de commutation de code 90 connecté au générateur de code 26 et qui permet de changer périodiquement le code local de réception de manière à vérifier en permanence l'état de chacune des mines les unes après les autres. La période choisie est supérieure au temps nécessaire pour la synchronisation du code local du récepteur sur celui de la mine ayant le même code, après que la mine ait répondu.
La mine ne répond que lorsqu'elle est dans un état désactivé. La réception d'un signal, en sortie du récepteur indique que la mine est dans un état désactivé. Le signal de sortie du récepteur embarqué est alors utilisé par l'ordinateur embarqué à bord du véhicule pour mettre à jour la cartographie rendant compte de l'état activé ou désactivé des mines. Dans le cas où la désactivation d'une mine n'est pas effective, la cartographie permet un guidage du véhicule de façon à éviter l'endroit où est localisé cette mine.
pour réaliser un système à faible coût, il est préférable d'utiliser un maximum de circuits numériques pour réaliser les différentes fonctions. Les émetteurs et les récepteurs sont en grande partie numérisables. Seuls les amplificateurs et les composants discrets nécessaires aux fonctions de filtrage sont analogiques. L'utilisation de circuits spécifiques tels que des circuits ASIC ou des circuits Hybrides permettent d'obtenir un encombrement et un coût en série minimum.
les antennes d'émission et de réception sont, pour la partie embarquée, des antennes filaires simples omnidirectionnelles et pour la partie intégrée aux mines, des antennes microstrip. Leur simplicité en limite le coût.

## Revendications

1. Procédé de transmission de données par étalement de spectre à séquence directe, les données étant constituées par des états de valeur binaires, caractérisé en ce qu'il consiste :
- à l'émission, à produire, au rythme d'un signal d'horloge, un code d'étalement constitué d'une séquence pseudo-aléatoire de valeurs binaires, à sélectionner et à émettre suivant la valeur binaire des données, une première séquence pseudo-aléatoire S1, respectivement une deuxième séquence pseudo-aléatoire S2, la deuxième séquence S2 étant identique à la première séquence S1 décalée d'une période d'horloge du code,
- à la réception, à produire un code pseudo-aléatoire identique à celui produit à l'émission et synchronisé sur le signal reçu, à détecter des impulsions d'erreur correspondant à des changements d'état des données transmises et à comparer ces impulsions d'erreur à deux niveaux de seuil respectivement positif et négatif.

2. Procédé selon la revendication 1, caractérisé en ce que la sélection des séquences S1, respectivement S2, est asynchrone par rapport à l'horloge du code.

3. Procédé selon la revendication 2, caractérisé en ce qu'il consiste en outre à l'émission, à effectuer un précodage différentiel des données et à la réception, à effectuer une démodulation différentielle du signal obtenu après comparaison des impulsions d'erreur aux niveaux de seuil.

4. Dispositif de transmission de données par étalement de spectre à séquence directe comportant un dispositif d'émission et un dispositif de réception, caractérisé en ce que :
- le dispositif d'émission comporte un générateur de code (12) pseudo-aléatoire produisant une séquence pseudo-aléatoire de valeurs binaires au rythme d'un signal d'horloge, et un multiplexeur (11) qui, suivant la valeur binaire des données, sélectionne une séquence pseudo-aléatoire S1, respectivement S2, la séquence S2 étant la même séquence que S1 décalée d'une période d'horloge de code,
- le dispositif de réception comporte un discriminateur de phase (25) comportant une boucle à verrouillage de retard dans laquelle un générateur de code (26) produit un code pseudo-aléatoire identique à celui produit à l'émission et synchronisé sur celui-ci, un dispositif de détection (40) d'un signal d'erreur de synchronisation comportant un dispositif de comparaison (42) à deux niveaux de seuil.

5. Dispositif selon la revendication 4, caractérisé en ce que le dispositif d'émission comporte en outre des moyens (10) de codage différentiel des données et en ce que le dispositif de réception comporte en outre des moyens (45) de démodulation différentielle des données.

6. Application du dispositif de transmission de données selon l'une quelconque des revendications 4 ou 5 à un système de télécommande d'un changement d'état de mines à partir d'une station embarquée à bord d'un véhicule, caractérisé en ce que le véhicule (50) est équipé de deux dispositifs d'émission (51,52) pour émettre vers l'avant, respectivement vers l'arrière, du véhicule (50) des ordres de télécommande du changement de l'état des mines et d'un dispositif de réception (53) pour recevoir de chaque mine (54,55) un signal significatif de son état, et en ce que chaque mine est équipée d'un dispositif de réception (56) pour recevoir l'ordre de changement d'état provenant du véhicule (50) et un dispositif d'émission (57) pour émettre en direction du véhicule (50) un signal significatif de son état.

7. Application selon la revendication 6, caractérisée en ce que chaque dispositif d'émission (51,52) embarqué comporte des moyens de commutation (3) pour sélectionner un ordre de télécommande particulier, cet ordre de télécommande étant soit un ordre de désactivation pour permettre le passage du véhicule, soit un ordre d'activation après le passage du véhicule, et en ce que chaque dispositif de réception (56) intégré aux mines comporte deux comparateurs de parité (47,48) pour déterminer si le message reçu correspond à un ordre d'activation, respectivement à un ordre de désactivation.

8. Application selon la revendication 7, caractérisée en ce que le dispositif d'émission (57) intégré à chaque mine engendre un code d'étalement qui est propre à la mine considérée et auquel correspond bijectivement une adresse, et en ce que le dispositif de réception (53) embarqué à bord du véhicule (50), comporte un dispositif de commutation de code (90) connecté au générateur de code 26 pour changer périodiquement le code d'étalement local et vérifier l'état de chacune des mines les unes après les autres.

9. Application selon la revendication 8, caractérisée en ce que les mines émettent un signal persistant quand elles sont désactivées et n'émettent aucun signal quand elles sont activées.

10. Application selon l'une quelconque des revendications 6 à 9, caractérisée en ce que le véhicule (50) comporte en outre, en sortie du dispositif de réception (53), un ordinateur (58) associé à un écran de contrôle (59) pour enregistrer et visualiser tout changement d'état des mines.
